# EUROPÄISCHE PATENTANMELDUNG

(11) **EP 4 356 741 A1**
(43) Veröffentlichungstag der Anmeldung: **24.04.2024**
(21) Anmeldenummer: 22202912.6
(22) Anmeldetag: 21.10.2022
(51) Int. Cl.: A22C 17/00, A23B 4/28

(54) **NADELREGISTER UND FÜHRUNGSKÖRPER FÜR EINE DICHTUNGSANORDNUNG EINES NADELREGISTERS**

(71) Anmelder: Schröder Maschinenbau GmbH, 33824 Werther (DE)
(72) Erfinder: Lipsch, Peter, 33824 Werther (DE)
(74) Vertreter: Ter Meer Steinmeister & Partner

(57) **Zusammenfassung**

Nadelregister für Injektionsvorrichtungen zur Injektion von Flüssigkeit in Lebensmittelprodukte, mit einer Verteilerkammer (16) zur Verteilung der Flüssigkeit auf mehrere parallele, hohle Nadeln (10), die sich jeweils durch eine in einer Wand (18, 20) der Verteilerkammer (16) gebildete Bohrung (28) erstrecken, und mit einer Dichtungsanordnung, die Führungskörper (22) aufweist, die jeweils in eine der Bohrungen (28) eingesetzt sind und die Nadel (10) umgeben und die einerseits am Umfang der Nadel und andererseits an der Innenfläche der Bohrung (28) abgedichtet sind, dadurch gekennzeichnet, dass die Führungskörper (22) aus einem elastischen Kunststoffmaterial gefertigt sind und am inneren und am äußeren Umfang jeweils eine einstückig angeformte Dichtlippe (32, 42) aufweisen.

## Beschreibung

Die Erfindung betrifft ein Nadelregister für Injektionsvorrichtungen zur Injektion von Flüssigkeit in Lebensmittelprodukte, mit einer Verteilerkammer zur Verteilung der Flüssigkeit auf mehrere parallele, hohle Nadeln, die sich jeweils durch eine in einer Wand der Verteilerkammer gebildete Bohrung erstrecken, und mit einer Dichtungsanordnung, die Führungskörper aufweist, die jeweils in eine der Bohrungen eingesetzt sind und die Nadel umgeben und die einerseits am Umfang der Nadel und andererseits an der Innenfläche die Bohrung abgedichtet sind.

Beispiele für Injektionsvorrichtungen, in denen solche Nadelregister verwendet werden, sind etwa Pökelvorrichtungen, mit denen Lake in Fleischprodukte injiziert wird. Typischerweise sind ein oder mehrere Nadelregister vertikalbeweglich über einem Förderer angeordnet, auf dem das Pökelgut schrittweise vorgerückt wird. Wenn der Förderer anhält, werden die Nadelregister abgesenkt, so dass die Nadeln in das Pökelgut einstechen und die Lake injiziert werden kann. Bei einigen dieser Nadelregister sind die Nadeln axial in den Führungskörpern beweglich, damit sie beispielsweise bei Auftreffen auf einen Knochen ausweichen können.

Aus EP 3 449 731 A1 ist ein Nadelregister mit einer Dichtungsanordnung bekannt, bei der die Führungskörper aus Metall bestehen und sowohl am inneren Umfang als auch am äußeren Umfang eine umlaufende Nut aufweisen, die einen Dichtring aufnimmt.

Da die Flüssigkeiten, die in die Lebensmittelprodukte injiziert werden, mit den Innenflächen der Nadeln und der Verteilerkammer in Berührung kommen, ist eine regelmäßige und gründliche Reinigung des Nadelregisters unerlässlich.

Aufgabe der Erfindung ist es, ein reinigungsfreundliches Nadelregister mit einer vereinfachten Dichtungsanordnung zu schaffen.

Diese Aufgabe wird erfindungsgemäß dadurch gelöst, dass die Führungskörper aus einem elastischen Kunststoffmaterial gefertigt sind und am inneren und am äußeren Umfang jeweils eine einstückig angeformte Dichtlippe aufweisen.

Durch diese Gestaltung der Führungskörper wird die Herstellung und Montage der Dichtungsanordnung erleichtert. Ein weiterer Vorteil besteht darin, dass die Führungskörper keine umlaufenden Nuten mehr aufzuweisen brauchen, die sich, auch wenn das Nadelregister zu Reinigungszwecken zerlegt wird, nur schwer reinigen lassen. Des weiteren wird eine höhe Haltbarkeit erreicht, da sich die Dichtlippen elastisch verformen können, ohne dabei gegen Scherkanten gedrückt zu werden, die bei der herkömmlichen Bauweise durch die Ränder der Nuten gebildet werden.

Die Elastizität des Kunststoffmaterials lässt sich so einstellen, dass einerseits eine hohe Dichtungswirkung erreicht wird, andererseits jedoch der Führungskörper insgesamt eine stabile Abstützung und Führung der Nadel ermöglicht.

Vorteilhafte Ausgestaltungen der Erfindung sind in den Unteransprüchen angegeben.

Bei dem elastischen Kunststoffmaterial der Führungskörper kann es sich um ein thermoplastisches Polyurethan handeln, insbesondere ein Polyurethan auf Polyether-Basis. Diese Materialien sind für Einsatzfälle geeignet und zugelassen, bei denen sie in Kontakt mit Lebensmitteln kommen, und weisen die benötigen Elastizitäts- und Dichtungseigenschaften und, sofern die Nadeln axialbeweglich sind, auch die nötigen Gleiteigenschaften auf.

Die Dichtlippe am äußeren Umfang des Führungskörpers kann in der Weise konisch ausgebildet sein, dass sie sich bei axialer Belastung des Führungskörpers an einer Schulter der den Führungskörper aufnehmenden Bohrung abstützt und dadurch radial aufgeweitet wird. Auf diese Weise wird eine radiale Anpresskraft erzeugt, die sicherstellt, dass die Dichtlippe dicht an der Umfangsfläche der Bohrung anliegt.

An dem Ende, das der konischen Dichtlippe entgegengesetzt ist, kann der Führungskörper einen radial abstehenden Flansch bilden, der sich außerhalb der Bohrung parallel zur Wand der Verteilerkammer erstreckt und dabei vorzugsweise zu dieser Wand einen gewissen Abstand aufweist. Dadurch ist es möglich, die Führungskörper für mehrere Nadeln mit einer Druckplatte gleichmäßig gegen die Wand der Verteilerkammer vorzuspannen und dadurch die Anpresskraft zu erhöhen, mit der sich die konische Dichtlippe an der Schulter und der Umfangswand der Bohrung abstützt.

Die am inneren Umfang des Führungskörpers gebildete Dichtlippe kann sich in einem Endabschnitt an dem Ende des Führungskörpers befinden, an dem auch die konische Dichtlippe am äußeren Umfang angeordnet ist. Wenn dann die Dichtlippe am inneren Umfang durch die Nadel radial aufgeweitet wird, so trägt dies zugleich dazu bei, die radiale Anpresskraft für die äußere Dichtlippe zu erhöhen.

In einer Ausführungsform sind die Nadeln jeweils durch zwei parallele Wände der Verteilerkammer hindurchgeführt, und die Dichtungsanordnung weist für jede Nadel zwei

Führungskörper auf, die jeweils die Durchführung in einer der beiden Wände abdichten. Die konische äußere Dichtlippe befindet sich dann vorzugsweise an dem Ende des Führungskörpers, das dem Inneren der Verteilerkammer zugewandt ist, und das Ende des Führungskörpers ist so gestaltet, dass die konische Dichtlippe von innen durch den in der Verteilerkammer herrschenden Druck beaufschlagt wird. Dadurch wird die radiale Anpresskraft für die äußere Dichtlippe noch zusätzlich erhöht.

Die innere Dichtlippe kann am Ende eines axialen Vorsprungs gebildet sein, der sich in Richtung auf die Verteilerkammer verjüngt. In dem Fall erhöht der statische Druck in der Verteilerkammer zugleich auch die radiale Anpresskraft für die innere Dichtlippe.

Im folgenden wird ein Ausführungsbeispiel anhand der Zeichnung näher erläutert.

Es zeigen:
- Fig. 1: einen Teilschnitt durch ein Nadelregister gemäß einem Ausführungsbeispiel der Erfindung;
- Fig. 2: einen vergrößerten Schnitt durch einen elastischen Führungskörper im unbelasteten Zustand; und

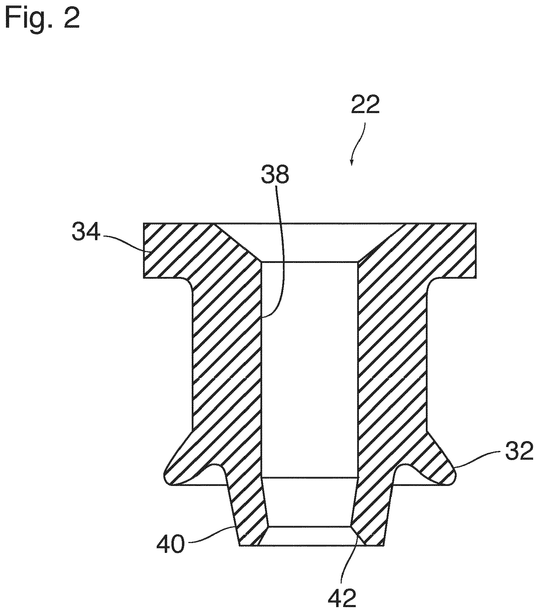

- Fig 2: einen vergrößerten Schnitt durch den Führungskörper im Zust<nd während des Einbaus in das Nadelregiter.

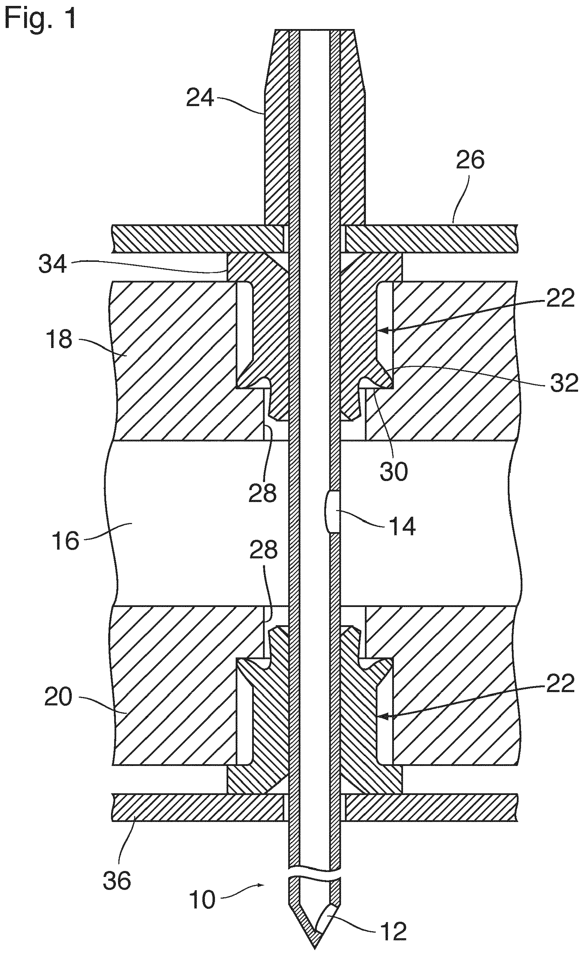

Das in Fig. 1 gezeigte Nadelregister weist eine Vielzahl paralleler hohler Nadeln 10 auf, von denen in der Zeichnung nur eine einzige dargestellt ist. Die Nadeln 10 dienen zur Injektion von Pökellake in nicht gezeigte Fleischprodukte und weisen zu diesem Zweck an ihrer Spitze (unten in Fig. 1) eine Austrittsöffnung 12 für die Lake und weiter oberhalb eine Einlassöffnung 14 auf. Die Einlassöffnung 14 liegt innerhalb einer Verteilerkammer 16, die durch eine obere Wand 18 und eine untere Wand 20 begrenzt wird. Mittels einer Dichtungsanordnung, die durch zwei Führungskörper 22 gebildet wird, ist die Nadel 10 dicht durch beide Wände 18, 20 der Verteilerkammer hindurchgeführt.

Das in Fig. 1 obere Ende der Nadel 10 ist außerhalb der Verteilerkammer 14 mittels eines Halters 24 an einer Lochplatte 26 befestigt. Beispielsweise ist die Nadel 10 durch Presssitz oder Schweißen in dem Halter 24 gehalten, der seinerseits auf der von der Verteilerkammer abgekehrten Seite an die Lochplatte 26 angeschweißt ist.

Die Lochplatte 26 trägt mehrere der Nadeln 10, die sich auf diese Weise zu Reinigungszwecken einfach aus dem Nadelregister entnehmen lassen. Die oberen Enden der Nadeln 10 sind offen, so dass die Nadeln bei der Reinigung gut gespült werden können. Wenn die Pökelvorrichtung in Betrieb ist, werden die offenen Enden der Nadeln 10 mit Hilfe eines nicht gezeigten Verschlusselements geschlossen, so dass die Lake ausschließlich über die Austrittsöffnungen 12 austreten kann.

Das Nadelregister ist vertikalbeweglich über einem nicht gezeigten Förderer angeordnet, auf dem die zu pökelnden Fleischprodukte schrittweise zugeführt werden. In jedem Takt wird das Nadelregister abgesenkt, während der Förderer angehalten ist, so dass die Nadeln 10 in das Fleisch einstechen. Die Lake in der Verteilerkammer 16 wird dabei unter Druck gesetzt, so dass sie unter Druck in das Fleisch injiziert wird,

Die Führungskörper 22 sind im Spritzgießverfahren aus einem thermoplastischen Polyurethan Polyether-Basis hergestellt sind jeweils in einer gestuften Bohrung 28 aufgenommen, die auf der Außenseite der Wand 18 bzw. 20 einen größeren Durchmesser hat als auf der Innenseite und somit eine radial verlaufende Schulter 30 bildet.

Jeder der Führungskörper 22 ist insgesamt hohlzylindrisch ausgebildet und bildet somit einen Führungskanal 38 (Fig. 2), der einen Abschnitt der Nadel 10 weitgehend spielfrei aufnimmt. An der äußeren Umfangsfläche weist jeder Führungskörper am in Bezug auf die Verteilerkammer 16 inneren Ende eine konische Dichtlippe 32 auf, die sowohl in radialer Richtung als auch in axialer Richtung vorspringt und sich auf der Schulter 30 der Bohrung 28 abstützt. Am entgegengesetzten Ende bildet jeder Führungskörper 22 einen Flansch 34, der an der Außenseite der Wand 18 bzw. 20 anliegt. Durch die Lochplatte 26 wird auf die Führungskörper 22 aller Nadeln in der oberen Wand 18 gleichmäßig ein leichter Druck ausgeübt, so dass der Flansch 34 fest in Anlage an der Wand 18 gehalten wird. Die Länge des Führungskörpers 22 ist so bemessen, dass die Dichtlippe 32 an der Schulter 30 axial gestaucht und damit zugleich radial aufgeweitet wird, so dass das äußere Ende der Dichtlippe fest gegen die Umfangswand der Bohrung 28 angedrückt wird.

An der Unterseite der unteren Wand 20 ist zu dem gleichen Zweck eine gelochte Druckplatte 36 angeordnet, deren Löcher die Nadeln 10 mit Spiel aufnehmen.

In Fig. 2 ist ein einzelner Führungskörper 22 im unbelasteten Zustand gezeigt. Der Führungskanal 38 für die Nadel 10 ist am oberen (in Bezug auf die Verteilerkammer 16 äußeren) Ende konisch erweitert, damit die Nadel 10 leichter eingeführt werden kann. Am unteren Ende weist der Führungskörper einen Fortsatz 40 auf, der über das untere Ende der Dichtlippe 32 hinausreicht und zum freien Ende hin konisch verjüngt ist. Am freien Ende bildet der Fortsatz 40 eine Dichtlippe 42, die radial in den Führungskanal 38 hineinragt.

Wenn die Nadel 10 in den Führungskanal 38 eingeführt wird, so wird der Fortsatz 40 elastisch aufgeweitet, so dass die Dichtlippe 42 mit gewisser Anpresskraft an der Umfangsfläche der Nadel 10 anliegt. Die elastische Verformung des Fortsatzes 40 führt zugleich auch zu einer gewissen radialen Aufweitung der äußeren Dichtlippe 32, die deshalb mit um so größerer Anpresskraft an der Innenfläche der Bohrung 28 anliegt.

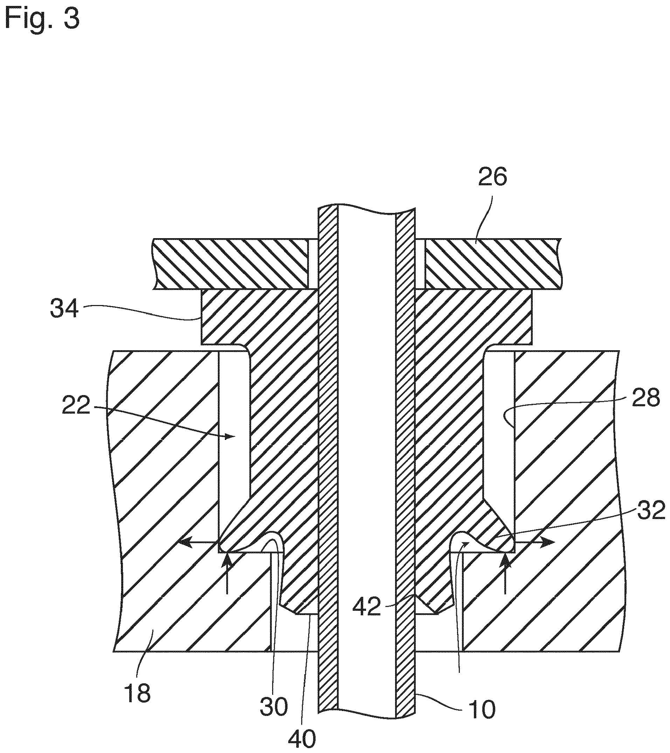

Fig. 3 zeigt den Führungskörper 22 in dem Zustand, in dem die Nadel 10 durchgesteckt ist und die Lochplatte 26 auf den Flanschen 34 aufliegt aber noch nicht angedrückt ist. Man erkennt, dass der Abstand zwischen der Unterseite des Flansches 34 und dem axialen Ende der Dichtlippe 32 etwas größer ist als die Länge des oberen, im Durchmesser erweiterten Teils der Bohrung 28. Wenn die Lochplatte 26 gegen die Wand 18 angedrückt wird, kommt es deshalb zu einer leichten axialen Kompression der Dichtlippe 32. Die dabei von der Schulter 30 auf die Dichtlippe 32 ausgeübte Reaktionskraft ist in Fig. 3 durch Pfeile angedeutet und bewirkt ein Biegemoment, das die Dichtlippe nach außen biegt und fest gegen die Innenfläche der Bohrung 28 andrückt. Die innere Dichtlippe 42 ist durch die Nadel 10 aufgeweitet worden und liegt deshalb mit gewisser Anpresskraft an der Umfangsfläche der Nadel 10 an.

Aufgrund der Verjüngung des Fortsatzes 40 verbleibt zwischen der äußeren Umfangsfläche dieses Fortsatzes und der inneren Umfangsfläche des inneren Teils der Bohrung 28 ein Ringspalt. Wenn die Lake in der Verteilerkammer 16 unter Druck gesetzt wird, so wird deshalb die Innenfläche der Dichtlippe 32 mit diesem Druck beaufschlagt, wie in Fig. 3 durch einen Pfeil symbolisiert wird. Dadurch kommt es zu einer zusätzlichen Aufweitung und festeren Anlage der Dichtlippe 32 an der Wand der Bohrung 28.

Währen im gezeigten Ausführungsbeispiel die Nadeln 10 starr an der Wand 18 gehalten sind, können in anderen Ausführungsformen die Nadeln auch axialbeweglich in den Führungskörpern 22 geführt sein.

## Patentansprüche

1. Nadelregister für Injektionsvorrichtungen zur Injektion von Flüssigkeit in Lebensmittelprodukte, mit einer Verteilerkammer (16) zur Verteilung der Flüssigkeit auf mehrere parallele, hohle Nadeln (10), die sich jeweils durch eine in einer Wand (18, 20) der Verteilerkammer (16) gebildete Bohrung (28) erstrecken, und mit einer Dichtungsanordnung, die Führungskörper (22) aufweist, die jeweils in eine der Bohrungen (28) eingesetzt sind und die Nadel (10) umgeben und die einerseits am Umfang der Nadel und andererseits an der Innenfläche der Bohrung (28) abgedichtet sind, **dadurch gekennzeichnet, dass** die Führungskörper (22) aus einem elastischen Kunststoffmaterial gefertigt sind und am inneren und am äußeren Umfang jeweils eine einstückig angeformte Dichtlippe (32, 42) aufweisen.

2. Nadelregister nach Anspruch 1, bei der die Führungskörper (22) aus einem thermoplastischen Polyurethan hergestellt sind.

3. Nadelregister nach Anspruch 2, bei der die Führungskörper (22) aus einem thermoplastischen Polyurethan auf Polyether-Basis hergestellt sind.

4. Nadelregister nach einem der vorstehenden Ansprüche, bei dem die am äußeren Umfang jedes Führungskörpers (22) gebildeten Dichtlippen (32) konisch ausgebildet sind und unter Spannung an einer Schulter (30) sowie an einer Innenfläche der Bohrung (28) anliegen.

5. Nadelregister nach Anspruch 4, bei dem die Führungskörper (22) jeweils auf der Außenseite der Verteilerkammer (16) einen radial vorspringenden Flansch (34) aufweisen, der zum axialen Ende der konischen Dichtlippe (32) einen Abstand aufweist, der größer ist als der Abstand zwischen der Schulter (30) der Bohrung (28) und der Außenfläche der Wand (18, 20).

6. Nadelregister nach Anspruch 4 oder 5, bei dem die am inneren Umfang jedes Führungskörpers (22) gebildete Dichtlippe (42) sich am axialen Ende eines axialen Fortsatzes (40) des Führungskörpers befindet, der über die äußere Dichtlippe (32) hinaus vorspringt.

7. Nadelregister nach Anspruch 6, bei dem der Fortsatz (40) zum freien Ende hin verjüngt ist.

8. Nadelregister nach Anspruch 6 oder 7, bei dem der Fortsatz (40) mit der Umfangsfläche der Bohrung (28) einen Ringspalt bildet, der die Innenfläche der äußeren Dichtlippe (32) mit dem Inneren der Verteilerkammer (16) verbindet.

9. Führungskörper (22) für eine Dichtungsanordnung eines Nadelregisters nach einem der vorstehenden Ansprüche, **dadurch gekennzeichnet, dass** der Führungskörper aus einem elastischen Kunststoffmaterial gefertigt ist und an seinem äußeren Umfang eine einstückig angeformte umlaufende konische Dichtlippe (32) bildet und an einem näher an der konischen Dichtlippe (32) gelegene Ende einen axialen Fortsatz (40) aufweist, der an seinem inneren Umfang eine radial nach innen vorspringende Dichtlippe (42) bildet.

10. Führungskörper (22) nach Anspruch 9, bei dem der Fortsatz (40) zum freine Ende hin verjüngt ist.

11. Führungskörper (22) nach Anspruch 9 oder 10, der am dem Fortsatz (40) entgegengesetzten Ende einen radial vorspringenden Flansch (34) aufweist.
